# EUROPÄISCHE PATENTANMELDUNG

(11) **EP 4 840 800 A1**
(43) Veröffentlichungstag der Anmeldung: **18.11.2026**
(21) Anmeldenummer: 25177026.9
(22) Anmeldetag: 16.05.2025
(51) Int. Cl.: B65G 47/32, B25J 15/00, B65G 47/91

(54) **GREIFEREINHEIT ZUM ÜBERGEBEN EINER MEHRZAHL VON PRODUKTEN**

(71) Anmelder: KOCH Pac-Systeme GmbH, 72285 Pfalzgrafenweiler (DE)
(72) Erfinder: Müller, Kevin, 72285 Pfalzgrafenweiler (DE); Ganszki, David, 72285 Pfalzgrafenweiler (DE)
(74) Vertreter: Wächter, Jochen

(57) **Zusammenfassung**

Eine erfindungsgemäße Greifereinheit (2) umfasst eine Mehrzahl von Greifeinrichtungen (4) zum Erfassen jeweils eines Produkts (3), eine Kurvenplatte (8), die mindestens eine Kurvenbahn (10) aufweist, und eine Verbindungsstruktur (12), die eine Parallelogrammführung (14) umfasst und die relativ zur Kurvenplatte (8) drehbar ist. Zumindest eine Greifeinrichtung (4) der Mehrzahl von Greifeinrichtungen (4) ist mittels der Verbindungsstruktur (12) entlang der mindestens einen Kurvenbahn (10) verschiebbar gelagert.

## Beschreibung

Die vorliegende Erfindung betrifft eine Greifereinheit für eine Transfervorrichtung zum Übergeben einer Mehrzahl von Produkten, insbesondere von Verpackungsmaterialien oder Verpackungseinheiten, sowie eine Transfervorrichtung mit einer solchen Greifereinheit. Die vorliegende Erfindung betrifft auch ein Verfahren zum Übergeben einer Mehrzahl von Produkten mittels einer solchen Greifereinheit.

Bei der Verarbeitung von Produkten in einer Anlage mit mehreren Bearbeitungsstationen werden die Produkte häufig in einem von einer Bearbeitungsstation abhängigen Bereitstellungsmuster angeordnet bereitgestellt. Das Bereitstellungsmuster kann sich von einem Prozessmuster unterscheiden, in dem die Produkte der weiteren Verarbeitung in nachfolgenden Bearbeitungsstationen zuzuführen sind. Entsprechende Anlagen umfassen daher eine Sortiereinheit, die die Produkte vom Bereitstellungsmuster in das Prozessmuster umsortiert, bevor die Produkte mittels einer Transfervorrichtung an eine nachfolgende Bearbeitungsstation oder Fördereinrichtung übergeben werden. Das Umsortieren mittels der Sortiereinheit führt jedoch zur Verlangsamung des Verarbeitungsprozesses und aufgrund des zusätzlichen Verarbeitungsschritts zu einer größeren Unsicherheit des Prozesses. Zudem wirkt sich das Bereitstellen einer Sortiereinheit nachteilig auf die Kosten und Größe der Maschine aus.

Es ist daher eine Aufgabe der vorliegenden Erfindung, eine zuverlässige und effiziente Bereitstellung von Produkten im gewünschten Muster zu ermöglichen.

Diese Aufgabe wird durch den Gegenstand des Anspruchs 1 gelöst. Bevorzugte Ausführungsformen sind Gegenstand der abhängigen Ansprüche.

Eine erfindungsgemäße Greifereinheit für eine Transfervorrichtung zum Übergeben einer Mehrzahl von Produkten, insbesondere von Verpackungsmaterialien oder Verpackungseinheiten, umfasst eine Mehrzahl von Greifeinrichtungen zum Erfassen jeweils eines Produkts der Mehrzahl von Produkten, eine Kurvenplatte, die mindestens eine Kurvenbahn aufweist, und eine Verbindungsstruktur, die eine Parallelogrammführung umfasst und die relativ zur Kurvenplatte drehbar ist. Zumindest eine Greifeinrichtung der Mehrzahl von Greifeinrichtungen ist mittels der Verbindungsstruktur beweglich und entlang der mindestens einen Kurvenbahn verschiebbar gelagert.

Auf diese Art und Weise wird eine Greifereinheit bereitgestellt, die es während der Übergabe der Mehrzahl von Produkten mittels einer Transfervorrichtung ermöglicht, das Muster und die Abstände der Mehrzahl von Produkten zu verändern. Dadurch kann auf eine zusätzliche Sortiereinheit verzichtet werden, sodass die Bearbeitungszeit sowie die Größe und die Kosten der Transfervorrichtung reduziert und die Prozesssicherheit erhöht werden kann.

Bei den Produkten handelt es sich vorzugweise um Verpackungen, wie z.B. Kontaktlinsenverpackungen, Blisterverpackungen, Schachteln und dergleichen, oder um Verpackungsmaterialien, wie z.B. Zuschnitte, Einlagen, Blister, Schalen, Hauben, Deckelemente, Faltschachteln und dergleichen.

Jede Greifeinrichtung der Mehrzahl von Greifeinrichtungen erfasst ein Produkt. Hierzu kann jede Greifeinrichtung ein Aufnahmeelement, wie zum Beispiel einen Saugnapf, oder eine Mehrzahl von Aufnahmeelementen aufweisen. Die Ausbildung und Anzahl der Aufnahmeelemente sind in der Regel abhängig von der Größe und Gestalt der Mehrzahl von Produkten. Beispielsweise kann eine Schale einer Kontaktlinsenverpackung mittels eines Aufnahmeelements erfasst werden, während es bei einem Blister oder ähnlich großen Verpackungsmaterialien von Vorteil sein kann, diese jeweils mittels einer Mehrzahl von Aufnahmeelementen zu erfassen.

Vorzugsweise sind die Greifeinrichtungen als Sauger bzw. Vakuumgreifer ausgebildet. Diese eignen sich besonders gut zum schonenden Erfassen von Produkten und sind weitestgehend unabhängig von der Geometrie der Produkte einsetzbar. Grundsätzlich können aber auch andere Greifer verwendet werden, die sich zum Erfassen der jeweiligen Produkte eignen.

Die Verbindungsstruktur verbindet vorzugsweise zumindest einen Teil der Greifeinrichtungen und besonders bevorzugt alle Greifeinrichtungen der Mehrzahl von Greifeinrichtungen miteinander. Dadurch kann sichergestellt werden, dass die Greifeinrichtungen und somit die Produkte stets in dem gewünschten Muster angeordnet sind.

In einer bevorzugten Ausführungsform sind mindestens zwei Greifeinrichtungen der Mehrzahl von Greifeinrichtungen mittels der Verbindungsstruktur beweglich gelagert. Die Kurvenplatte weist dann mindestens zwei Kurvenbahnen auf, wobei die mindestens zwei Greifeinrichtungen verschiebbar entlang jeweils einer der mindestens zwei Kurvenbahnen gelagert sind. Insbesondere entspricht die Anzahl von Kurvenbahnen der Anzahl von beweglich gelagerten Greifeinrichtungen. Auf diese Weise kann die Greifereinheit beliebig skaliert werden, um die gewünschte Anzahl von Produkten gleichzeitig zu übergeben und in einem vorbestimmten Muster anzuordnen. Es ist denkbar, dass alle Greifeinrichtungen der Mehrzahl von Greifeinrichtungen beweglich gelagert sind. Alternativ kann zumindest eine Greifeinrichtung der Mehrzahl von Greifeinrichtungen relativ zur Kurvenplatte unbeweglich bzw. festgelegt sein.

Es ist auch denkbar, dass die Greifereinheit zusätzlich eine zweite Mehrzahl von Greifeinrichtungen, eine zweite Kurvenplatte, die mindestens eine zweite Kurvenbahn aufweist, und eine zweite Verbindungsstruktur mit einer zweiten Parallelogrammführung umfasst, die jeweils analog zu der Mehrzahl von Greifeinrichtungen, der Kurvenplatte, der Kurvenbahn und der Verbindungsstruktur ausgebildet sind, wie sie hierin beschrieben sind.

Alle der hierin bezüglich der zumindest einen beweglich gelagerten Greifeinrichtung und der zumindest einen Kurvenbahn beschriebenen Merkmale treffen analog auf die mindestens zwei Greifeinrichtungen bzw. auf jede beweglich gelagerte Greifeinrichtung der Mehrzahl von Greifeinrichtungen und jede Kurvenbahn zu.

Die Verbindungsstruktur ist vorzugsweise dazu ausgebildet und eingerichtet, die Mehrzahl von Greifeinrichtungen in zumindest zwei unterschiedlichen Mustern anzuordnen. In einer bevorzugten Ausführungsform ist die zumindest eine Greifeinrichtung mittels der Verbindungsstruktur zwischen einer ersten Position und einer zweiten Position entlang der mindestens einen Kurvenbahn verschiebbar. Die Mehrzahl von Greifeinrichtungen ist in einem ersten Muster angeordnet, wenn sich die zumindest eine Greifeinrichtung in der ersten Position befindet, und ist in einem zweiten Muster angeordnet, das sich von dem ersten Muster unterscheidet, wenn sich die zumindest eine Greifeinrichtung in der zweiten Position befindet. Beispielsweise entspricht das erste Muster einem Bereitstellungsmuster, in dem die Mehrzahl von Produkten aufgenommen werden können, und entspricht das zweite Muster einem Prozessmuster, in dem die Mehrzahl von Produkten abgegeben werden können. Vorzugsweise sind das erste und das zweite Muster jeweils eine Matrix. Mit anderen Worten ist die Mehrzahl von Greifeinrichtungen im jeweiligen Muster in zumindest einer Zeile und einer Mehrzahl von Spalten oder in einer Mehrzahl von Zeilen und zumindest einer Spalte angeordnet.

Die Verbindungsstruktur ist vorzugsweise derart ausgebildet, dass die Mehrzahl von Greifeinrichtungen in allen Positionen relativ zueinander dieselbe Ausrichtung aufweisen. Beispielsweise weisen alle Greifeinrichtungen der Mehrzahl von Greifeinrichtungen relativ zueinander eine erste Ausrichtung auf, wenn sich die zumindest eine Greifeinrichtung in der ersten Position befindet, und weisen alle Greifeinrichtungen relativ zueinander weiterhin die erste Ausrichtung auf, wenn sich die zumindest eine Greifeinrichtung in der zweiten Position befindet. Mit anderen Worten ist die Verbindungsstruktur derart ausgebildet, dass die Ausrichtung der zumindest einen Greifeinrichtung bzw. aller beweglichen Greifeinrichtungen bei der Bewegung entlang der Kurvenbahn unverändert bleibt. Dies wird insbesondere durch die Parallelogrammführung erreicht. So kann das Muster der Mehrzahl von Produkten verändert werden, ohne dass sich die Ausrichtung der Produkte relativ zueinander verändert. Beispielsweise weist die Mehrzahl von Produkten jeweils eine Längsachse in einer Ebene parallel zu einer Ebene auf, in der die Kurvenbahn verläuft bzw. die Kurvenplatte ausgebildet ist, und die Längsachsen der Mehrzahl von Produkten sind sowohl im Bereitstellungsmuster, während der Bewegung, als auch im Prozessmuster parallel zueinander ausgerichtet. Die Mehrzahl von Greifeinrichtungen wird also nicht relativ zueinander verdreht.

Besonders bevorzugt ist die Mehrzahl von Greifeinrichtungen in einem ersten Abstand angeordnet, wenn sich die zumindest eine Greifeinrichtung in der ersten Position befindet, und ist die Mehrzahl von Greifeinrichtungen in einem zweiten Abstand angeordnet, der sich von dem ersten Abstand unterscheidet, wenn sich die zumindest eine Greifeinrichtung in der zweiten Position befindet. Dadurch kann nicht nur das Muster, sondern auch der Abstand der Mehrzahl von Produkten während der Übergabe mittels der Greifereinheit verändert werden.

Die Parallelogrammführung kann zwei zueinander parallele Führungselemente und zwei zueinander parallele Verbindungselemente umfassen, die jeweils die zwei Führungselemente verbinden. Die Führungselemente und die Verbindungselemente bilden ein Parallelogramm, das vorzugsweise in einer Ebene liegt, die parallel zur Kurvenplatte ausgerichtet ist. In einer bevorzugten Ausführungsform umfasst die Parallelogrammführung vier Stangen, von denen zwei Stangen die Führungselemente und zwei Stangen die Verbindungselemente bilden. Vorzugsweise ist jedes Verbindungselement mit den beiden Führungselementen mittels jeweils eines Drehgelenks verbunden. Die Drehgelenke können in den Eckpunkten des Parallelogramms vorgesehen sein. Dadurch ist die Gestalt der Parallelogrammführung, insbesondere der Winkel zwischen den Führungselementen und den Verbindungselementen und somit der Abstand zwischen den Führungselementen, in einer Ebene veränderbar.

Vorzugsweise ist die zumindest eine Greifeinrichtung entlang der Verbindungsstruktur verschiebbar gelagert, insbesondere auf der Parallelogrammführung. Zum Beispiel ist die zumindest eine Greifeinrichtung auf den Führungselementen der Parallelogrammführung verschiebbar gelagert. Dadurch lässt sich der Abstand der Mehrzahl von Greifeinrichtungen einstellen, während ihre Ausrichtung relativ zueinander unverändert bleibt.

Die Verbindungsstruktur ist relativ zur Kurvenplatte drehbar. Vorzugsweise ist die Parallelogrammführung relativ zur Kurvenplatte drehbar gelagert, insbesondere an der Kurvenplatte drehbar gelagert. Hierzu können eine erste Lagerstelle und eine zweite Lagerstelle vorgesehen sein, die die Verbindungsstruktur drehbar lagern. Die erste und die zweite Lagerstelle können eine Drehachse definieren, um die die Verbindungsstruktur drehbar ist. Vorzugsweise ist jeweils ein Führungselement der Parallelogrammführung an einer Lagerstelle der beiden Lagerstellen gelagert. Die erste und die zweite Lagerstelle können jeweils eine Achse aufweisen, um die die Führungselemente an der jeweiligen Lagerstelle drehbar sind. Die Achsen sind vorzugsweise senkrecht zu der Ebene ausgerichtet, die durch die Kurvenplatte bzw. die Kurvenbahn definiert ist. Die Drehachse, um die die gesamte Verbindungsstruktur drehbar ist, ist vorzugsweise parallel zu den Achsen der beiden Lagerstellen ausgerichtet und zwischen diesen angeordnet. Besonders bevorzugt sind die Führungselemente an der ersten bzw. der zweiten Lagerstelle translatorisch festgelegt, also nicht relativ zu diesen verschiebbar.

Vorzugsweise sind zwei Punkte der Parallelogrammführung relativ zur Kurvenplatte festgelegt. Hierzu können die erste und die zweite Lagerstelle an der Kurvenplatte oder relativ zur Kurvenplatte festgelegt sein.

Die Verbindungsstruktur umfasst bevorzugt zumindest einen Schlitten, an dem die zumindest eine Greifeinrichtung angebracht ist. Der zumindest eine Schlitten ist vorzugsweise verschiebbar auf den zwei parallelen Führungselementen der Parallelogrammführung gelagert. Dadurch kann ein Abstand zwischen den Greifeinrichtungen verändert werden. Analog kann jede bewegliche Greifeinrichtung mittels eines Schlittens auf den zwei parallelen Führungselementen der Parallelogrammführung gelagert sein. Auch eine unbewegliche Greifeinrichtung kann mittels eines Schlittens auf den zwei parallelen Führungselementen gelagert sein, wobei dieser Schlitten nicht entlang der Führungselemente verschiebbar ist.

Weiterhin ist es bevorzugt, wenn der zumindest eine Schlitten relativ zu den zwei Führungselementen drehbar gelagert ist. Dadurch kann die Ausrichtung des Schlittens und somit der zumindest einen Greifeinrichtung beibehalten werden, wenn die Verbindungsstruktur relativ zur Kurvenplatte gedreht wird.

In einem Ausführungsbeispiel umfasst der zumindest eine Schlitten einen Träger, der sich zwischen den zwei parallelen Führungselementen der Parallelogrammführung erstreckt, eine erste und eine zweite Buchse, wobei die erste Buchse auf einem Führungselement und die zweite Buchse auf dem anderen Führungselement verschiebbar gelagert ist, und ein erstes und ein zweites Drehgelenk, wobei das erste Drehgelenk den Träger mit der ersten Buchse verbindet und das zweite Drehgelenk den Träger mit der zweiten Buchse verbindet. Die jeweilige Greifeinrichtung ist dann bevorzugt an dem Träger des Schlittens angebracht.

Zum Führen der zumindest einen Greifeinrichtung entlang der zumindest einen Kurvenbahn ist die zumindest eine Greifeinrichtung vorzugsweise mittels eines Führungsabschnitts in der zumindest einen Kurvenbahn gelagert. Der Führungsabschnitt kann zum Beispiel mittels eines Gleit- oder Wälzlagers beweglich in der Kurvenbahn aufgenommen sein. Vorzugsweise umfasst der zumindest eine Schlitten den Führungsabschnitt. Der Führungsabschnitt kann drehfest an dem zumindest einen Schlitten angebracht oder integral mit diesem ausgebildet sein. In dem zuvor beschriebenen Ausführungsbeispiel kann der Führungsabschnitt am Träger des zumindest einen Schlittens angebracht sein, vorzugsweise auf einer der Greifeinrichtung gegenüberliegenden Seite.

Die Kurvenplatte ist vorzugsweise eine ebene Kurvenplatte. Die zumindest eine Kurvenbahn verläuft dann in einer Ebene. Ist eine Mehrzahl von Kurvenbahnen vorgesehen, verlaufen alle Kurvenbahnen in derselben Ebene. Die Greifeinrichtungen erstrecken sich vorzugsweise senkrecht zu dieser Ebene und sind parallel zu dieser Ebene verschiebbar. Dadurch wird erreicht, dass sich die Mehrzahl von Produkten in einer Ebene befindet und in dieser bewegt wird.

Im Allgemeinen ist es bevorzugt, dass die zumindest eine Kurvenbahn als Nut in der Kurvenplatte ausgebildet ist. Die Nut kann die Kurvenplatte vollständig durchdringen oder eine Tiefe aufweisen, die geringer als eine Dicke der Kurvenplatte ist.

Es ist weiterhin von Vorteil, wenn die Greifereinheit eine Betätigungseinrichtung umfasst, die dazu eingerichtet ist, die Verbindungsstruktur relativ zur Kurvenplatte zu drehen. Die Betätigungseinrichtung kann direkt mit der Verbindungsstruktur gekoppelt sein, um eine Kraft bzw. ein Drehmoment auf die Verbindungsstruktur zu übertragen. Ein besonders einfacher und kostengünstiger Aufbau wird erreicht, wenn die Greifereinheit genau eine Betätigungseinrichtung umfasst. So können alle Greifeinrichtungen der Mehrzahl von Greifeinrichtungen mittels einer einzigen Betätigungseinrichtung bewegt werden. Die Betätigungseinrichtung ist vorzugsweise ein Drehaktor, beispielsweise in Form eines Servomotors.

Die Erfindung betrifft auch eine Transfervorrichtung zum Übergeben einer Mehrzahl von Produkten, insbesondere von Verpackungsmaterialien oder Verpackungseinheiten, mit mindestens einer erfindungsgemäßen Greifereinheit. Es sind auch Ausführungsformen denkbar, in denen die Transfervorrichtung eine Mehrzahl von erfindungsgemäßen Greifereinheiten umfasst. Die Mehrzahl von Greifereinheiten kann miteinander gekoppelt sein oder im Wesentlichen unabhängig voneinander ausgebildet sein. Grundsätzlich sind alle bezüglich der erfindungsgemäßen Greifereinheit beschriebenen Merkmale analog auf die Transfervorrichtung übertragbar und umgekehrt.

Die Transfervorrichtung ist vorzugsweise derart ausgebildet, dass die Greifereinheit zwischen einem Aufnahmebereich und einem Ablagebereich bewegbar ist, wobei die Greifereinheit dazu eingerichtet ist, im Aufnahmebereich eine Mehrzahl von Produkten aufzunehmen, die im ersten Muster angeordnet sind, und die aufgenommene Mehrzahl von Produkten im Ablagebereich abzulegen, wobei die Mehrzahl von Produkten im zweiten Muster angeordnet sind, das sich von dem ersten Muster unterscheidet. Auf diese Weise kann die Mehrzahl von Produkten besonders einfach und effizient während der Übergabe vom Aufnahmebereich in den Ablagebereich im gewünschten Muster angeordnet werden.

Die Erfindung betrifft auch ein Verfahren zum Übergeben einer Mehrzahl von Produkten, insbesondere von Verpackungsmaterialien oder Verpackungseinheiten, mittels einer erfindungsgemäßen Greifereinheit. Alle bezüglich der erfindungsgemäßen Greifereinheit beschriebenen Merkmale sind analog auf das Verfahren übertragbar und umgekehrt.

Das Verfahren umfasst die folgenden Schritte:
Aufnehmen einer Mehrzahl von Produkten mittels der Mehrzahl von Greifeinrichtungen im Aufnahmebereich, wobei die Mehrzahl von Produkten im ersten Muster angeordnet ist,
Bewegen der Mehrzahl von Produkten mittels der Greifereinheit vom Aufnahmebereich zum Ablagebereich,
Anordnen der Mehrzahl von Produkten im zweiten Muster, das sich von dem ersten Muster unterscheidet, mittels der Mehrzahl von Greifeinrichtungen während des Bewegens vom Aufnahmebereich zum Ablagebereich, und
Ablegen der Mehrzahl von Produkten im Ablagebereich, wobei die Mehrzahl von Produkten im zweiten Muster angeordnet ist.

Das Anordnen der Mehrzahl von Produkten im zweiten Muster umfasst vorzugsweise das Drehen der Verbindungsstruktur relativ zur Kurvenplatte. Dabei wird die zumindest eine Greifeinrichtung der Mehrzahl von Greifeinrichtungen vorzugsweise entlang der zumindest einen Kurvenbahn bewegt, wobei die Ausrichtung der zumindest einen Greifeinrichtung unverändert bleibt. Durch das Bewegen entlang der Kurvenbahn kann die zumindest eine Greifeinrichtung zudem entlang der Verbindungsstruktur verschoben werden, sodass sich der Abstand der Mehrzahl von Greifeinrichtungen verändert.

Weitere Einzelheiten, Merkmale und Vorteile der vorliegenden Erfindung ergeben sich aus der nachfolgenden Beschreibung unter Bezugnahme auf die beigefügten Zeichnungen.
- Fig. 1: zeigt schematisch eine Ausführungsform einer erfindungsgemäßen Greifereinheit in einer perspektivischen Ansicht, wobei eine Mehrzahl von Greifeinrichtungen der Greifereinheit in einem ersten Muster angeordnet ist.
- Fig. 2: zeigt die Greifereinheit nach Fig. 1 in einer perspektivischen Ansicht während einer Bewegung der Mehrzahl von Greifeinrichtungen von der in Fig. 1 dargestellten Anordnung in die in Fig. 3 dargestellte Anordnung.
- Fig. 3: zeigt die Greifereinheit nach Fig. 1 in einer perspektivischen Ansicht, wobei die Mehrzahl von Greifeinrichtungen der Greifereinheit in einem zweiten Muster angeordnet ist.
- Fig. 4: zeigt schematisch in einer Draufsicht eine Mehrzahl von Produkten in einem ersten Muster und in einem zweiten Muster.
- Fig. 5: zeigt schematisch in einer Draufsicht eine Transfervorrichtung mit einer erfindungsgemäßen Greifereinheit.

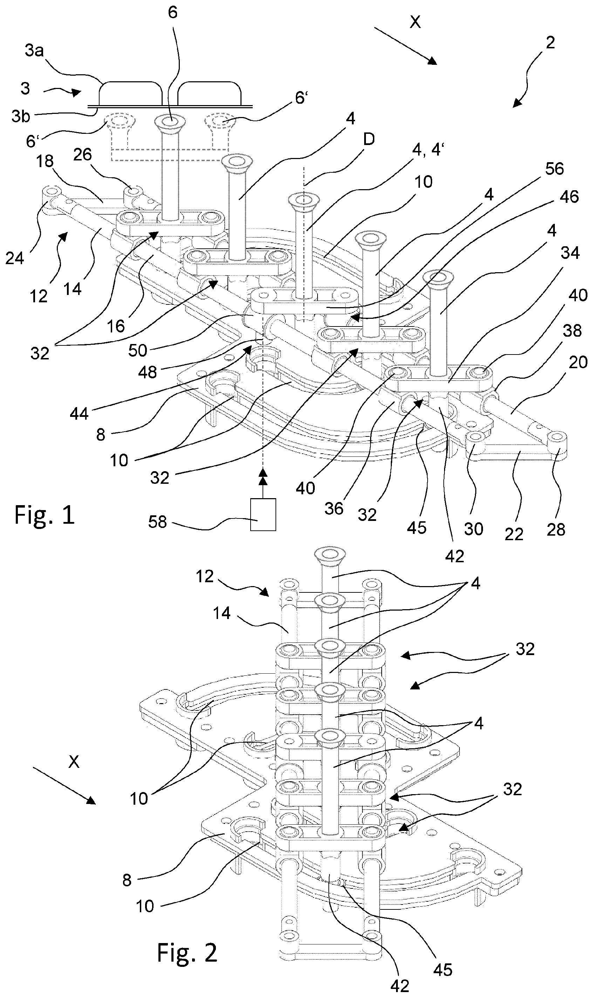

In Fig. 1 ist eine erfindungsgemäße Greifereinheit 2 für eine Transfervorrichtung zum Übergeben einer Mehrzahl von Produkten 3 schematisch in einer perspektivischen Ansicht dargestellt. Die Greifereinheit 2 umfasst eine Mehrzahl von Greifeinrichtungen 4 zum Erfassen jeweils eines Produkts 3. Die dargestellte Greifereinheit 2 umfasst insgesamt fünf Greifeinrichtungen 4, die bevorzugt als Vakuumgreifer bzw. Sauger ausgebildet sind. Alternative Ausführungsformen von Greifeinrichtungen sind denkbar.

Jede Greifeinrichtung 4 kann zumindest ein Aufnahmeelement 6, beispielsweise in Form eines Saugnapfs, zum Erfassen eines Produkts 3 umfassen. Bei größeren Produkten 3 ist es von Vorteil, wenn die Greifeinrichtungen 4 jeweils eine Mehrzahl von Aufnahmeelementen umfassen, wie hier durch die zusätzlichen Aufnahmeelemente 6' gestrichelt angedeutet. Auch in diesem Fall erfasst die Greifeinrichtung 4 mit der Mehrzahl von Aufnahmeelementen 6, 6' vorzugsweise nur ein Produkt 3.

Beispielhaft ist in Fig. 1 ein Produkt 3 in Form einer Verpackungseinheit dargestellt, die ein Aufnahmeelement 3a mit zwei napfförmigen Produktaufnahmen und ein Deckelement 3b umfasst, das die Produktaufnahmen verschließt. Es versteht sich, dass die Greifereinheit 2 ohne Weiteres andere Produkte, insbesondere andere Verpackungsmaterialien oder Verpackungseinheiten, erfassen kann. Die Art, Anordnung und Anzahl der Greifeinrichtungen 4 kann entsprechend angepasst werden.

Die Greifereinheit 2 umfasst weiterhin eine Kurvenplatte 8, die mindestens eine Kurvenbahn 10 aufweist. In der dargestellten Ausführungsform weist die Kurvenplatte 8 vier Kurvenbahnen 10 auf (siehe auch Fig. 2), in denen jeweils eine Greifeinrichtung 4 geführt ist. Die Kurvenbahnen 10 sind hier als Nuten in der Kurvenplatte 8 ausgebildet und durchdringen diese vollständig.

Weiterhin umfasst die Greifereinheit 2 eine Verbindungsstruktur 12, die eine Parallelogrammführung 14 umfasst. Die Verbindungsstruktur 12 ist relativ zur Kurvenplatte 8 drehbar, wie aus einer Zusammenschau der Figuren 1 bis 3 ersichtlich, und verbindet die Mehrzahl von Greifeinrichtungen 4 miteinander. Zumindest eine Greifeinrichtung 4 der Mehrzahl von Greifeinrichtungen 4 ist mittels der Verbindungsstruktur 12 bewegbar und entlang der Kurvenbahnen 10 verschiebbar gelagert. In der dargestellten Ausführungsform sind alle Greifeinrichtungen 4 bis auf die zentrale Greifeinrichtung 4' entlang einer der Kurvenbahnen 10 verschiebbar. Die zentrale Greifeinrichtung 4' ist hier ortsfest an der Kurvenplatte 8 angebracht.

Eine bevorzugte Ausführungsform der Verbindungsstruktur 12 wird nachfolgend im Detail beschrieben. Die Parallelogrammführung 14 der Verbindungsstruktur 12 umfasst hier zwei parallele Führungselemente 16, 20 und zwei parallele Verbindungselemente 18, 22, die die zwei Führungselemente 16, 20 verbinden. Zum Beispiel umfasst die Parallelogrammführung 14 eine erste Stange 16, eine zweite Stange 18, eine dritte Stange 20 und eine vierte Stange 22, die in allen Stellungen der Parallelogrammführung 14 ein Parallelogramm bilden. Hier erstrecken sich die erste und die dritte Stange 16, 20 (Führungselemente) parallel zueinander und erstrecken sich die zweite und die vierte Stange 18, 22 (Verbindungselemente) parallel zueinander. Jeweils zwei aneinander angrenzende Stangen 16, 18, 20, 22 sind mittels eines Drehgelenks drehbar miteinander verbunden, wobei sich die Gelenk vorzugsweise an den Eckpunkten des Parallelogramms befinden. Beispielsweise verbindet ein erstes Gelenk 24 die erste und die zweite Stange 16, 18, verbindet ein zweites Gelenk 26 die zweite und die dritte Stange 18, 20, verbindet ein drittes Gelenk 28 die dritte und die vierte Stange 20, 22 und verbindet ein viertes Gelenk 40 die vierte und die erste Stange 22, 16 miteinander.

Die beweglichen Greifeinrichtungen 4 sind bevorzugt verschiebbar entlang der Verbindungsstruktur 12 und insbesondere entlang der Parallelogrammführung 14 gelagert. Hierzu kann die Verbindungsstruktur 12 eine Mehrzahl von Schlitten 32 umfassen, die jeweils verschiebbar auf den zwei Führungselementen 16, 20 der Parallelogrammführung 14 und relativ zu diesen drehbar gelagert sind. Dadurch wird die Verschiebung der Mehrzahl von Greifeinrichtungen 4 beim Drehen der Verbindungsstruktur 12 ermöglicht.

Beispielsweise umfasst jeder Schlitten 32 einen Träger 34, der sich zwischen den zwei parallelen Führungselementen 16, 20 erstreckt, sowie eine erste Buchse 36 und eine zweite Buchse 38. Die erste Buchse 36 ist verschiebbar auf der ein Führungselement bildenden ersten Stange 16 gelagert und die zweite Buchse 38 ist verschiebbar auf der das andere Führungselement bildenden dritten Stange 20 gelagert, beispielsweise jeweils mittels eines Gleitlagers. Der Träger 34 kann jeweils mittels eines weiteren Drehgelenks 40 mit der ersten und der zweite Buchse 36, 38 verbunden sein. Die Greifeinrichtung 4 ist drehfest mit dem Träger 34 verbunden.

Zum Führen der Greifeinrichtungen 4 entlang der Kurvenbahnen 10 kann jeder Schlitten 32 weiterhin einen Führungsabschnitt 42 umfassen, der in der jeweiligen Kurvenbahn 10 verschiebbar gelagert ist, beispielsweise mittels eines Wälz- oder Gleitlagers 45. Der Führungsabschnitt 42 kann zylindrisch ausgebildet sein und sich von dem Träger 34 in die Kurvenbahn 10 hinein erstrecken.

Die Verbindungsstruktur 12 ist drehbar an der Kurvenplatte 8 angebracht. Dies kann mittels einer ersten Lagerstelle 44 und einer zweiten Lagerstelle 46 erfolgen, die eine Drehachse D definieren, um die die Verbindungsstruktur 12 relativ zur Kurvenplatte 8 drehbar ist. Im dargestellten Ausführungsbeispiel umfasst die erste Lagerstelle 44 einen ersten Bolzen 48, der in oder an der Kurvenplatte 8 drehbar gelagert ist und drehfest mit einer ersten Hülse 50 verbunden ist. Die erste Hülse 50 ist auf einem der Führungselemente, hier auf der ersten Stange 16, gelagert, insbesondere auf dieser festgelegt. Die zweite Lagerstelle 46 kann analog zur ersten Lagerstelle 44 ausgebildet sein und einen zweiten Bolzen 52 und eine zweite Hülse 54 umfassen, die auf dem anderen Führungselement, hier auf der dritten Stange 20, festgelegt ist. Es kann ein weiterer Träger 56 vorgesehen sein, der sich zwischen der ersten und der zweiten Hülse 50, 54 erstreckt und an dem die zentrale Greifeinrichtung 4' angebracht ist.

Schließlich umfasst die Greifereinheit 2 eine Betätigungseinrichtung 58, die zum Drehen der Verbindungsstruktur 12 eingerichtet und in Fig. 1 schematisch angedeutet ist. Die Betätigungseinrichtung 58 kann ein Drehmoment auf die Verbindungsstruktur 12 übertragen und ist hierzu beispielsweise mit dem ersten und/oder dem zweiten Bolzen 48, 52 gekoppelt.

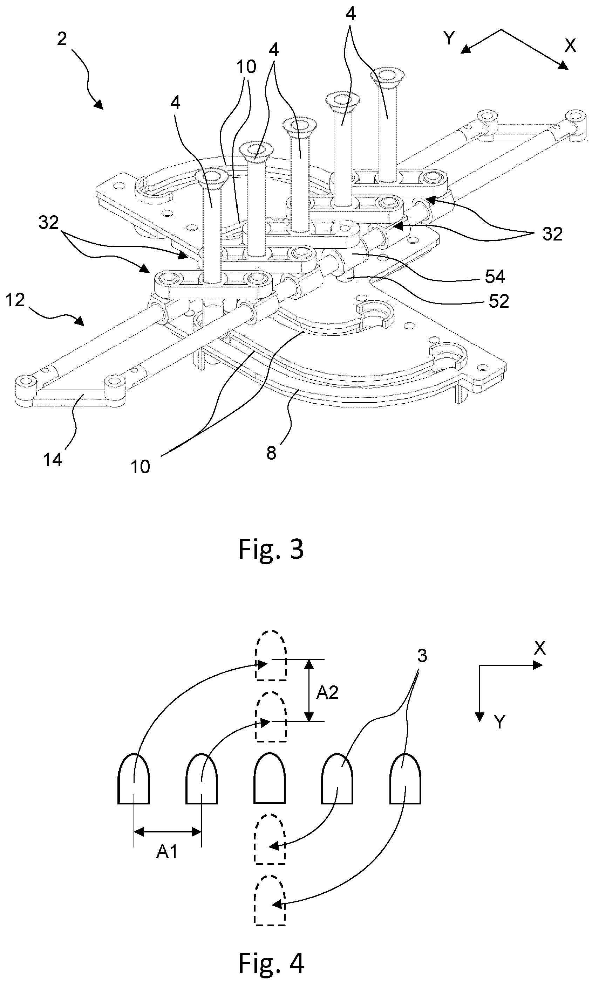

Die Funktion der Greifereinheit 2 ist nachfolgend unter Bezugnahme auf die Figuren 1 bis 4 beschrieben. Die Greifeinrichtungen 4 werden hier beispielsweise relativ zur Kurvenplatte 8 von einer in Fig. 1 gezeigten ersten Position über eine in Fig. 2 gezeigte Zwischenposition in eine in Fig. 3 gezeigte zweite Position bewegt.

In Fig. 1 befinden sich die beweglichen Greifeinrichtungen 4 jeweils in ihrer ersten Position und sind in einem ersten Muster angeordnet, das hier beispielhaft einer 1x5 Matrix entspricht. Die Greifeinrichtungen 4 sind also in einer Zeile und fünf Spalten bzw. in einer ersten Richtung X nebeneinander angeordnet. Entsprechend sind auch die erfassten Produkte 3 im ersten Muster und somit in der ersten Richtung X nebeneinander angeordnet, wie in Fig. 4 schematisch dargestellt. Das erste Muster kann einem Bereitstellungsmuster der Produkte 3 entsprechen, in dem die Greifereinheit 2 die Mehrzahl von Produkten 3 aufnimmt. Die Greifeinrichtungen 4 bzw. die Produkte 3 sind in der ersten Position in einem ersten Abstand A1 angeordnet (siehe Fig. 4).

Die Greifereinheit 2 ist dazu eingerichtet, das Muster und die Abstände, in denen die Produkte 3 angeordnet sind, zu verändern. Hierzu können die Verbindungsstruktur 12 und mit dieser die beweglichen Greifeinrichtungen 4 relativ zur Kurvenplatte 8 um die Drehachse D gedreht werden. Wie in Fig. 2 zu sehen, ist die Verbindungsstruktur 12 und insbesondere die Parallelogrammführung 14 derart ausgebildet, dass während der Bewegung relativ zur Kurvenplatte 8 die Ausrichtung der Greifeinrichtungen 4 relativ zueinander unverändert bleibt. Genauer sind in diesem Ausführungsbeispiel die Träger 34, 56 stets parallel zueinander angeordnet.

Die beweglichen Greifeinrichtungen 4 werden jeweils entlang einer der Kurvenbahnen 10 verschoben. Dabei ist der jeweilige Führungsabschnitt 42 der Greifeinrichtungen 4 mittels des Wälz- oder Gleitlagers 45 in der jeweiligen Kurvenbahn 10 geführt und gibt so die Position der Greifeinrichtungen 4 entlang der Parallogrammführung vor. Verändert sich der Abstand zwischen den Kurvenbahnen 10, verändert sich auch der Abstand der Greifeinrichtungen 4, die hierzu verschiebbar auf der Parallelogrammführung 14 gelagert sind.

In Fig. 1 befinden sich die beweglichen Greifeinrichtungen 4 in der zweiten Position und sind in einem zweiten Muster angeordnet, das sich von dem ersten Muster unterscheidet und hier beispielhaft einer 5x1 Matrix entspricht. Die Greifeinrichtungen 4 sind nun in fünf Zeilen und einer Spalte bzw. in einer zweiten Richtung Y hintereinander angeordnet. Entsprechend sind auch die erfassten Produkte 3 im zweiten Muster und somit in der zweiten Richtung Y hintereinander angeordnet, wie in Fig. 4 gestrichelt angedeutet. Das zweite Muster kann einem Prozessmuster der Produkte 3 entsprechen, in dem die Greifereinheit 2 die Mehrzahl von Produkten 3 abgibt. Die Greifeinrichtungen 4 bzw. die Produkte 3 sind in der zweiten Position in einem zweiten Abstand A2 angeordnet, der kleiner als der erste Abstand A1 ist (siehe Fig. 4).

Aus einer Zusammenschau der Figuren 1 bis 3 ist ersichtlich, dass sich die Gestalt der Parallelogrammführung 14 während der Drehung der Verbindungseinrichtung 12 um die Drehachse D verändert, die Ausrichtung der Schlitten 32 bzw. der Träger 34, 56 jedoch aufgrund der Lagerung und Führung auf der Parallelogrammführung 14 unverändert bleibt.

Die Greifereinheit 2 kann also während der Übergabe der Produkte 3 deren Muster und Abstände von einem ersten Muster, in dem die Produkte im ersten Abstand A1 nebeneinander angeordnet sind, zu einem zweiten Muster, in dem die Produkte im zweiten Abstand A2 hintereinander angeordnet sind, verändern.

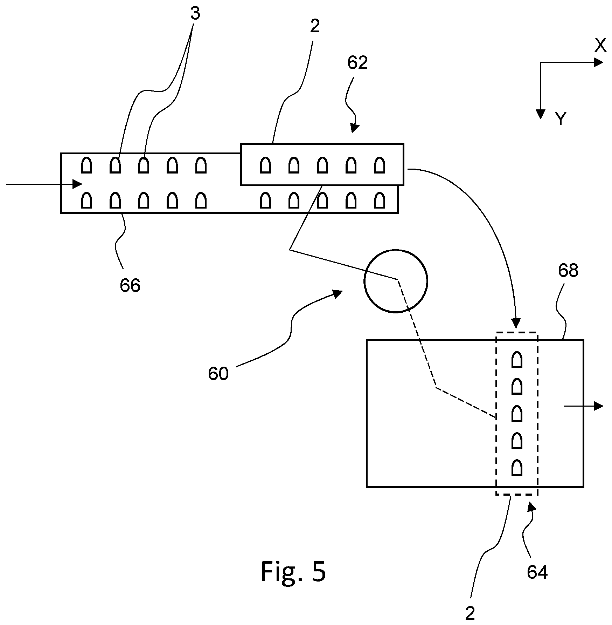

Eine mit der Greifereinheit 2 ausgestattete Transfervorrichtung 60, die sich dieses Prinzip zu Nutzen macht, ist schematisch in Fig. 5 dargestellt. Die Greifereinheit 2 ist dazu eingerichtet, eine Mehrzahl von Produkten 3 aufzunehmen, die in einem Aufnahmebereich 62 im ersten Muster angeordnet sind und beispielsweise auf einer Zuführung 66 bereitgestellt werden. Die Transfervorrichtung 60 übergibt die Mehrzahl von Produkten 3 beispielsweise an eine nachfolgende Förder- oder Bearbeitungseinrichtung 68. Dort kann die Greifereinheit 2 die Mehrzahl von Produkten 3 in einem Ablagebereich 64 ablegen, wobei die Mehrzahl von Produkten 3 im zweiten Muster angeordnet sind. Auf diese Weise wird die Mehrzahl von Produkten während der Übergabe zugleich vom Bereitstellungsmuster in das Prozessmuster überführt, sodass auf eine zusätzliche Sortiereinheit verzichtet werden kann.

Weitere Ausführungsformen der vorliegenden Erfindung sind für den Fachmann basierend auf der hierin enthaltenen detaillierten Beschreibung beispielhafter Ausführungsformen ersichtlich.

## Patentansprüche

1. Greifereinheit (2) für eine Transfervorrichtung (60) zum Übergeben einer Mehrzahl von Produkten (3), insbesondere von Verpackungsmaterialien oder Verpackungseinheiten, wobei die Greifereinheit (2) umfasst:
eine Mehrzahl von Greifeinrichtungen (4) zum Erfassen jeweils eines Produkts (3) der Mehrzahl von Produkten (3),
eine Kurvenplatte (8), die mindestens eine Kurvenbahn (10) aufweist; und
eine Verbindungsstruktur (12), die eine Parallelogrammführung (14) umfasst und die relativ zur Kurvenplatte (8) drehbar ist;
wobei zumindest eine Greifeinrichtung (4) der Mehrzahl von Greifeinrichtungen (4) mittels der Verbindungsstruktur (12) beweglich und entlang der mindestens einen Kurvenbahn (10) verschiebbar gelagert ist.

2. Greifereinheit (2) nach Anspruch 1, **dadurch gekennzeichnet, dass** die Verbindungsstruktur (12) derart ausgebildet ist, dass die Mehrzahl von Greifeinrichtungen in allen Positionen relativ zueinander dieselbe Ausrichtung aufweisen.

3. Greifereinheit (2) nach Anspruch 1 oder 2, **dadurch gekennzeichnet, dass** die zumindest eine Greifeinrichtung (4) zwischen einer ersten Position und einer zweiten Position entlang der mindestens einen Kurvenbahn (10) verschiebbar ist, wobei die Mehrzahl von Greifeinrichtungen (4) in einem ersten Muster angeordnet ist, wenn sich die zumindest eine Greifeinrichtung (4) in der ersten Position befindet, und die Mehrzahl von Greifeinrichtungen (4) in einem zweiten Muster angeordnet ist, das sich von dem ersten Muster unterscheidet, wenn sich die zumindest eine Greifeinrichtung (4) in der zweiten Position befindet.

4. Greifereinheit (2) nach Anspruch 3, **dadurch gekennzeichnet, dass** die Mehrzahl von Greifeinrichtungen (4) in einem ersten Abstand angeordnet ist, wenn sich die zumindest eine Greifeinrichtung (4) in der ersten Position befindet, und die Mehrzahl von Greifeinrichtungen (4) in einem zweiten Abstand angeordnet ist, der sich von dem ersten Abstand unterscheidet, wenn sich die zumindest eine Greifeinrichtung (4) in der zweiten Position befindet.

5. Greifereinheit (2) nach einem der vorhergehenden Ansprüche, **dadurch gekennzeichnet, dass** die zumindest eine Greifeinrichtung (4) entlang der Verbindungsstruktur (12) verschiebbar gelagert ist.

6. Greifereinheit (2) nach einem der vorhergehenden Ansprüche, **dadurch gekennzeichnet, dass** die Parallelogrammführung (14) zwei parallele Führungselemente (16, 20) und zwei parallele Verbindungselemente (18, 22) umfasst, die ein Parallelogramm bilden und gelenkig miteinander verbunden sind.

7. Greifereinheit (2) nach Anspruch 6, **dadurch gekennzeichnet, dass** die Verbindungsstruktur (12) zumindest einen Schlitten (32) umfasst, der verschiebbar auf zwei parallelen Stangen (16, 20) der Parallelogrammführung (14) gelagert ist und an dem die zumindest eine Greifeinrichtung (4) angebracht ist.

8. Greifereinheit (2) nach Anspruch 7, **dadurch gekennzeichnet, dass** der zumindest eine Schlitten (32) relativ zu den zwei Stangen (16, 20) drehbar gelagert ist.

9. Greifereinheit (2) nach einem der vorhergehenden Ansprüche, **dadurch gekennzeichnet, dass** die zumindest eine Greifeinrichtung (4) mittels eines Führungsabschnitts (42) in der zumindest einen Kurvenbahn (10) gelagert ist.

10. Greifereinheit (2) nach einem der vorhergehenden Ansprüche, **dadurch gekennzeichnet, dass** die Kurvenplatte (8) eine ebene Kurvenplatte (8) ist und die zumindest eine Kurvenbahn (10) in einer Ebene verläuft.

11. Greifereinheit (2) nach einem der vorhergehenden Ansprüche, **dadurch gekennzeichnet, dass** die Greifereinheit (2) genau eine Betätigungseinrichtung (58) umfasst, die dazu eingerichtet ist, die Verbindungsstruktur (12) relativ zur Kurvenplatte (8) zu drehen.

12. Greifereinheit (2) nach Anspruch 11, **dadurch gekennzeichnet, dass** die Betätigungseinrichtung (58) mit der Verbindungsstruktur (12) gekoppelt ist.

13. Transfervorrichtung (60) zum Übergeben einer Mehrzahl von Produkten (3), insbesondere von Verpackungsmaterialien oder Verpackungseinheiten, mit mindestens einer Greifereinheit (2) nach einem der Ansprüche 1 bis 12.

14. Transfervorrichtung (60) nach Anspruch 13, **dadurch gekennzeichnet, dass** die Greifer-einheit (2) zwischen einem Aufnahmebereich (62) und einem Ablagebereich (64) bewegbar ist, wobei die Greifereinheit (2) dazu eingerichtet ist, im Aufnahmebereich (62) eine Mehrzahl von Produkten (3) in einem ersten Muster aufzunehmen und im Ablagebereich (64) die aufgenommene Mehrzahl von Produkten (3) in einem zweiten Muster, das sich von dem ersten Muster unterscheidet, abzulegen.

15. Verfahren zum Übergeben einer Mehrzahl von Produkten (3), insbesondere von Verpackungsmaterialien oder Verpackungseinheiten, mittels einer Greifereinheit (2) nach einem der Ansprüche 1 bis 12, wobei das Verfahren umfasst:
Aufnehmen einer Mehrzahl von Produkten (3) mittels der Mehrzahl von Greifeinrichtungen (4) in einem Aufnahmebereich (62), wobei die Mehrzahl von Produkten (3) in einem ersten Muster angeordnet sind,
Bewegen der Mehrzahl von Produkten (3) mittels der Greifereinheit (2) vom Aufnahmebereich (62) zu einem Ablagebereich (64),
Anordnen der Mehrzahl von Produkten (3) in einem zweiten Muster, das sich von dem ersten Muster unterscheidet, mittels der Mehrzahl von Greifeinrichtungen (4) während des Bewegens vom Aufnahmebereich (62) zum Ablagebereich (64), und
Ablegen der Mehrzahl von Produkten (3) im Ablagebereich (64), wobei die Mehrzahl von Produkten (3) im zweiten Muster angeordnet ist.
